# EUROPEAN PATENT APPLICATION

(11) **EP 4 686 862 A1**
(43) Date of publication of application: **04.02.2026**
(21) Application number: 25187920.1
(22) Date of filing: 07.07.2025
(51) Int. Cl.: F16K 27/02, F16K 31/00, F16K 31/06, F16K 31/56, F17C 1/00

(54) **SUPPLY SHUT-OFF VALVE WITH LOW ELECTRICAL POWER CONSUMPTION**

(30) Priority: 29.07.2024 IN 202441057269
(71) Applicant: Cummins, Inc., Columbus, Indiana 47201 (US)
(72) Inventor: PATIL, Sandip, 411048 Pune (IN)
(74) Representative: Cleveland Scott York

(57) **Abstract**

A shut-off valve assembly includes a valve body having an interior cavity sized to receive a first plunger. The valve body includes an inlet aperture fluidically connected to an outlet aperture. A first actuator actuates the first plunger to move between a closed position that seals the outlet aperture and an open position to unseal the outlet aperture. A second plunger assembled with the interior cavity of the valve body such that the second plunger is disposed laterally relative to the first plunger. A second actuator actuates the second plunger to move between a first position wherein the second plunger does not engage the first plunger while in the closed position and a second position wherein the second plunger maintains the first plunger in the open position. The first and second actuators are de-energized while the second plunger holds the first plunger in the open position.

## Description

### Cross-Reference to Related Application:

The present application claims the benefit of the filing date of Indian Provisional Application No. 202441057269 filed on July 29, 2024, which is incorporated herein by reference.

### TECHINICAL FIELD

The present application relates generally to a supply shut-off valve having dual actuators.

### BACKGROUND

A shut-off valve is an electronically controlled valve that allows or stops the flow of fuel to the engine. The supply shut-off valve is often used in a hydrogen fuel cell system to control the flow of hydrogen from a high-pressure storage to a fuel cell stack. It is also used in hydrogen internal combustion engine, natural gas engines, or other similar application. The supply shut-off valve is operable between an open position which allows hydrogen to flow to the fuel cell stack and a closed position in which the supply shut-off valve is closed to stop the flow of hydrogen. During operation of the engine, the shut-off valve is open and typically remains open while the engine is on and the vehicle is in use. The shut-off valve will close when the hydrogen fuel is no longer required such as when the engine is shut off. The shut-off valve typically remains open for most of the time in its duty cycle.

The typical operating pressure for the shut-off valve can vary but often the pressure is higher such as between 30 to 300 bar. The shut-off valve opens by overcoming this high pressure and then the shut-off valve must remain in the open position while the engine is on. Solenoid valves are commonly used to actuate shut-off valves. A solenoid is an electromechanical device that converts electrical energy into mechanical motion. When an electrical current is applied, the solenoid generates a magnetic field, which moves a plunger or piston with the help of an armature to open or close the shut-off valve. The solenoid is energized to open the valve during normal operation and de-energized to close it during engine shutdown or emergencies. Due to the high pressure, a strong magnetic force is often required to open the shut-off valve. A strong magnetic force requires an actuator that can produce a higher electric current to energize the solenoid to keep or hold the shut-off valve in the open position. Since most of the operating zone of the shut-off valve is in the open condition, the power consumed by the actuator and the solenoid to hold the shut-off valve in the open position is high and must be sustained. Since the power and magnetic force are higher, typically these requirements lead to a large solenoid, which in turn increases the size of the shut-off valve. A large shut-off valve also consumes more power which is a parasitic loss on the engine system. A large shut-off valve also generates higher heat wherein heat generation and heat management is a challenge.

Therefore, further contributions in this area of technology are needed to reduce power consumption for a supply shut-off valve.

### SUMMARY

A shut-off valve assembly includes a valve body having an interior cavity sized to receive a first plunger. The valve body includes an inlet aperture fluidically connected to an outlet aperture. A first actuator actuates the first plunger to move between a closed position that seals the outlet aperture and an open position to unseal the outlet aperture. A second plunger assembled with the interior cavity of the valve body or with a sleeve of the first plunger. In any embodiment, the second plunger is disposed laterally relative to the first plunger. A second actuator actuates the second plunger to move between a first position wherein the second plunger does not engage the first plunger while the first plunger is in the closed position and a second position wherein the second plunger engages and maintains the first plunger in the open position. The first and second actuators can be de-energized while the second plunger holds the first plunger in the open position.

This summary is provided to introduce a selection of concepts that are further described below in the illustrative embodiments. This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

### BRIEF DESCRIPTION OF THE DRAWINGS

The concepts described herein are illustrative by way of example and not by way of limitation in the accompanying figures. For simplicity and clarity of illustration, elements illustrated in the figures are not necessarily drawn to scale. Where considered appropriate, references labels have been repeated among the figures to indicate corresponding or analogous elements.
Fig. 1 is a cross-sectional view of a shut-off valve assembly in a closed condition of the present disclosure.
Fig. 2 is a cross-sectional view of the shut-off valve assembly of Fig. 1 in an open condition of the present disclosure.

### DETAILED DESCRIPTION OF ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended, any alterations and further modifications in the illustrated embodiments, and any further applications of the principles of the invention as illustrated therein as would normally occur to one skilled in the art to which the invention relates are contemplated herein.

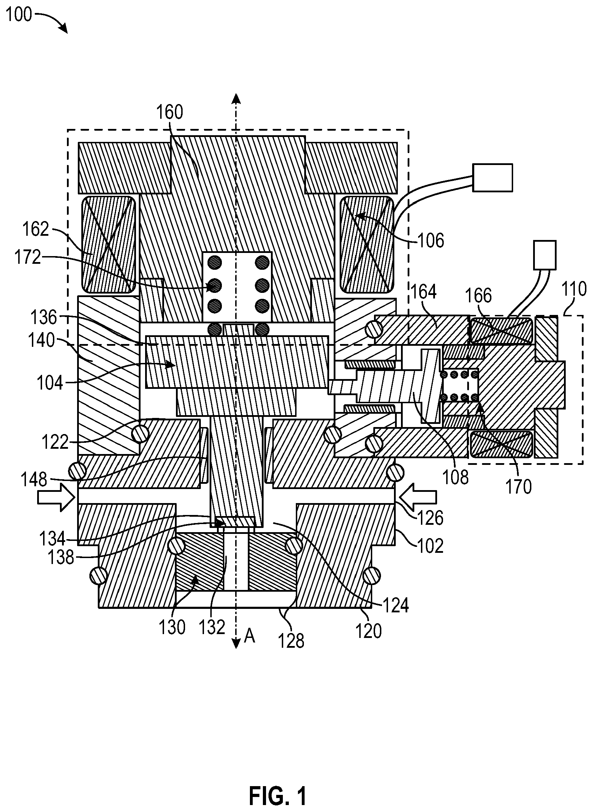

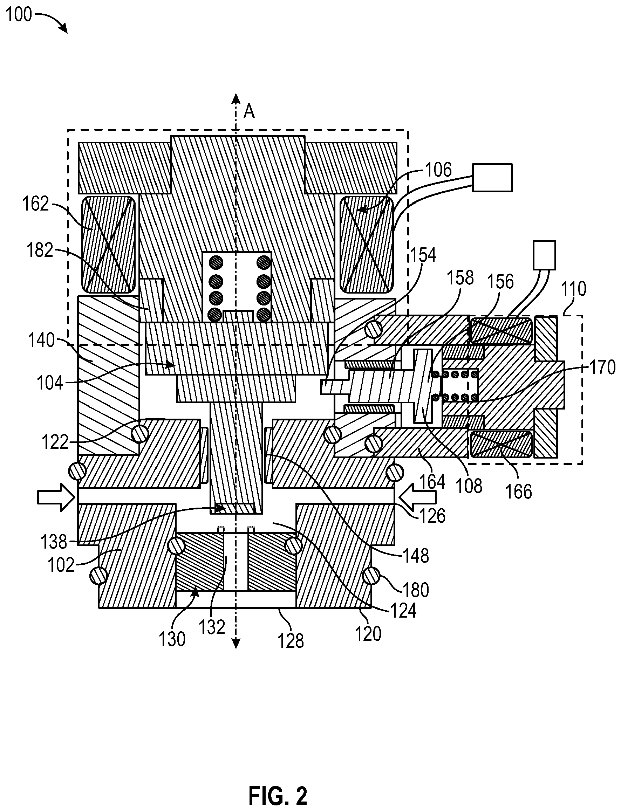

Turning now to the present application with reference to Figs. 1 and 2, an exemplary embodiment of a shut-off valve assembly 100 to control a flow of fluid is illustrated.

Fig. 1 illustrates the shut-off valve assembly 100 being in a closed condition wherein the shut-off valve assembly 100 prevents or blocks the flow of fluid through an outlet. In one embodiment, the fluid is pressurized hydrogen for a hydrogen fuel cell system. In another embodiment, the fluid is gas or diesel. Fig. 2 illustrates the shut-off valve assembly 100 being in an open condition wherein the shut-off valve assembly 100 allows the flow of fluid through the outlet. The shut-off valve assembly 100 includes a valve body 102, a first plunger 104, a first actuator 106, a second plunger 108, and a second actuator 110 that are configured to reduce the amount of power the shut-off valve assembly 100 consumes during operation. Since the power consumed is reduced when the shut-off valve assembly 100 is in a fully open condition, then there is a reduction in parasitic losses.

The valve body 102 extends along an axis A of the shut-off valve assembly 100. The valve body 102 extends between a first end 120 and a second end 122 spaced from the first end 120 along the axis A and defining an interior cavity 124. The valve body 102 further defines an inlet aperture 126 fluidically connected to an outlet aperture 128. The outlet aperture 128 is positioned at the first end 120.

In the illustrated embodiment, the valve assembly 100 includes a seat 130 that is configured and sized to assemble with the interior cavity 124 of the valve body 102. The seat 130 includes a seat axial passageway 132 that extends along a length of the seat 130. The seat axial passageway 132 is sealed by the first plunger 104 as described below. When the seat axial passageway 132 is sealed by the first plunger 104, flow of fluid is prevented through the outlet aperture 128. In one embodiment, seat 130 is composed of metal but can be made of other materials in other embodiments. In other embodiments, the valve assembly 100 may be configured such that the seat 130 is not included. In this exemplary embodiment, the outlet aperture 128 is configured to form a seal with the first plunger 104.

The first plunger 104 is assembled with the interior cavity 124 of the valve body 102 such that the first plunger 104 is disposed along the axis A. The first plunger 104 has a length that extends along axis A between a first end 134 and a second end 136. In the illustrated embodiment, a bushing 148 is positioned in the interior cavity 124 and configured such that a portion of the first plunger 104 slides within the bushing 148. The first end 134 of the first plunger 104 is configured to form a seal with the outlet aperture 128 and in particular to form a seal with the seat axial passageway 132 of the seat 130. In the illustrated embodiment, an elastomer seal 138 is mounted on the first end 134 of the first plunger 104 to engage the seat axial passageway 132 to seal the seat axial passageway 132 when the first plunger 104 is in the closed position. When the first plunger 104 is in the open position, the first end 134 of the first plunger 104 moves away from the seat axial passageway 132 to allow fluid to flow through the seat axial passageway 132 and through the outlet aperture 128.

The second plunger 108 can be assembled with the interior cavity 124 of the valve body 102 or the second plunger 108 can be assembled with a first sleeve 140. In the example embodiment, the second plunger 108 is disposed along an axis B that is perpendicular to axis A of the first plunger 104 such that the second plunger 108 engages the first plunger 104 when the second plunger 108 moves from a first position to a second position and the first plunger 104 is in the open position. When the second plunger 108 is in the first position, the second plunger 108 is a distance from the first plunger 104 to avoid contact with the first plunger 104. The second plunger 108 has a length that extends between a first end 154 and a second end 156. In the illustrated embodiment, a bushing 158 is positioned in the first sleeve 140 and configured for the second plunger 108 to slide within the bushing 158.

The first actuator 106 is operably assembled with the first plunger 104. The first actuator 106 is configured to actuate the first plunger 104 to move the first plunger 104 between the closed position to seal the outlet aperture 128 and the open position to unseal the outlet aperture 128. In particular, the first plunger 104 and the seal 134 engage the seat axial passageway 132 to seal and unseal the outlet aperture 128. The first actuator 106 is a core solenoid in the illustrated embodiment but may be configured differently in other embodiments. The first actuator 106 is configured for assembly with the valve body 102 and includes an actuator core 160 configured to engage the first plunger 104. The first actuator 106 includes a first coil 162 disposed around the actuator core 160. The first coil 162 is energized to move the first plunger 104 to the open position which is closer to the actuator core 160. When the second plunger 108 moves from the first position to the second position due to a spring load from a biasing member 170, the second plunger 108 engages the first plunger 104 and holds the first plunger 104 in the open position. While the first plunger 104 is held in the open position, the first coil 162 is de-energized and thereafter the first plunger 104 is held in the open position by the second plunger 108. The actuator core 160 includes a non-magnetic material 182 in the illustrated embodiment.

The second actuator 110 is operably assembled with the second plunger 108. The second actuator 110 is an electromagnetic actuator. The second actuator 110 actuates the second plunger 108 to move between the first position in which the second plunger 108 does not engage the first plunger 104 that is in the closed position and the second position in which the second plunger 108 engages the first plunger 104 while the first plunger 104 is in the open position to hold the first plunger 104 in the open position. The second actuator 110 includes a second sleeve 164 configured for assembly with either the first sleeve 140 or the valve body 102. In the illustrated embodiment, the second sleeve 164 is assembled with the first sleeve 140 in a press-fit joint. As illustrated, the second plunger 108 is slidably assembled with the second sleeve 164. A second coil 166 is disposed around the second plunger 108. As illustrated in Fig. 2, the second coil 166 is energized to hold the first plunger 104 in the open position.

The shut-off valve assembly 100 includes the biasing member 170 disposed between the second plunger 108 and a second actuator core 174. The second plunger 108 is biased by the biasing member 170 toward the first plunger 104 to hold the second plunger 108 in the second position after the second coil 166 is energized. After the second plunger 108 engages the first plunger 104 and the biasing member 170 biases the second plunger 108 towards the first plunger 104, then the second coil 166 is de-energized. Additionally, the first coil 162 can also be de-energized however the second plunger 108 remains engaged with the first plunger 104 to hold the first plunger 104 in the open position due to operation of a biasing member 170.

The shut-off valve assembly 100 includes a biasing member 172 disposed between the actuator core 160 and the first plunger 104. The first plunger 104 is biased by the biasing member 172 toward the outlet aperture 128 to form a seal with the outlet aperture 128 when the first plunger 104 is in the closed position and the first coil 162 is de-energized. The seal 134 on the first plunger 104 engages the seat axial passageway 132 to seal the seat axial passageway 132.

In the illustrated embodiment, the shut-off valve assembly 100 includes a plurality of O-rings or sealing rings 180 positioned between the valve body 102, the first sleeve 140, and the second sleeve 164 to prevent internal and/or external leakages.

In a closed position for the first plunger 104 wherein the first coil 162 is de-energized, the first plunger 104 is positioned adjacent to the seat axial passageway 132 to seal the seat axial passageway 132 and the outlet aperture 128. When the first coil 162 is de-energized, there is no power supply to the first coil 162 which ensures that the inlet aperture 126 and the outlet aperture 128 are disconnected. The biasing member 172 maintains the first plunger 104 in a closed position and seals the outlet aperture 128.

During operation of the shut-off valve assembly 100, when electric current is applied to the first coil 162 to energize the first coil 162 the first actuator 106 being an electromagnetic actuator pulls the first plunger 104 to an open position in which the first plunger 104 moves away from the seat axial passageway 132 to unseal the seat axial passageway 132 thereby compressing the biasing member 172 as shown in Fig. 2.

While the first plunger 104 is in the open position, the second plunger 108 moves towards first plunger 104 to the second position due to the biasing member 170 acting on the second plunger 108. Therefore, electric current is not required to move the second plunger 108. Electric current is applied to move the second plunger 108 to the first position and away from the first plunger 104. The second plunger 108 locks the first plunger 104 in the open position. The current can be removed to de-energize the first coil 162 and de-energize the second coil 166 and when the first plunger 104 is in the open position. The first plunger 104 does not return to the seat axial passageway 132 in the open position. The flow path between the inlet aperture 126 and the outlet aperture 128 remains open for fluid flow while the first and second coils 162 and 166 remain de-energized. There is no current requirement while the vehicle is running or whenever the fuel cell is in operation.

To close the fluid flow through the inlet aperture 126 and the outlet aperture 128, the second coil 166 is energized and the second plunger 108 is released to move from the second position to the first position as illustrated in Fig. 1. Next, the first coil 162 is energized and the first plunger 104 is released to move from the open position to the closed position as illustrated in Fig. 1. In the closed position, the biasing member 172 maintains the first plunger 104 in a sealed or closed configuration with the seat axial passageway 132 and the outlet aperture 128. Therefore, the first and the second coils 162 and 166 can be de-energized.

In accordance with above-described embodiments, an amount of time required to apply a current to the first and second coils 162 and 166 has been reduced. Moreover, current does not need to be held once the second plunger 108 engages the first plunger 104. Beneficially, the second actuator 110 may be smaller than the first actuator 106.

As is evident from the figures and text presented above, a variety of aspects of the present disclosure are contemplated.

Various aspects of the present application are contemplated. According to one aspect, a shut-off valve assembly to control a flow of fluid, the shut-off valve assembly comprising: a valve body extending along an axis between a first end and a second end, the valve body defining an interior cavity, the valve body further defines an inlet aperture fluidically connected to an outlet aperture; a first plunger assembled with the interior cavity of the valve body such that the first plunger is disposed along the axis and configured to form a seal with the outlet aperture; a first actuator operably assemcorebled with the first plunger, the first actuator is configured to actuate the first plunger to move between a closed position to seal the outlet aperture and an open position to unseal the outlet aperture; a second plunger assembled with the interior cavity of the valve body such that the second plunger is disposed relative to the first plunger, the second plunger is configured to engage the first plunger; and a second actuator operably assembled with the second plunger, the second actuator configured to actuate the second plunger to move between a first position in which the second plunger does not engage the first plunger when the first plunger is in the closed position and a second position in which the second plunger engages the first plunger when the first plunger is in the open position to hold the first plunger in the open position.

In one embodiment, the flow of fluid includes pressurized hydrogen.

In one embodiment, the first and the second actuators are each a core solenoid.

In one embodiment, the first actuator further comprises: a first sleeve configured for assembly with the valve body; an actuator core configured to engage the first plunger; and a first coil disposed around the actuator core, wherein the first coil is energized to move the first plunger to the open position.

In one embodiment, wherein the second actuator further comprises: a second sleeve configured for assembly with either the first sleeve or the valve body, wherein the second plunger is assembled with the second sleeve; and a second coil disposed around the second plunger, wherein the second coil is energized to move the second plunger to the second position to engage the first plunger while the first plunger is in the open position to hold the first plunger in the open position.

In one embodiment, the first coil is de-energized while the first plunger is held in the open position by the second plunger.

In one embodiment, further comprising: a biasing member disposed between the second plunger and the second coil, wherein the second plunger is biased by the biasing member toward the first plunger to hold the second plunger in the second position.

In one embodiment, the second coil is de-energized.

In one embodiment, further comprising a biasing member disposed between the actuator core and the first plunger, wherein the first plunger is biased by the biasing member toward the outlet aperture when the first plunger is in the closed position.

In one embodiment, the second plunger is disposed laterally relative to the first plunger.

In one embodiment, wherein the second actuator is smaller in size than the first actuator.

In one embodiment, an elastomer seal attached to an end of the first plunger, wherein the elastomer seal forms the seal with the outlet aperture.

In one embodiment, wherein the second coil is energized to release the second plunger such that the second plunger moves from the first position to the second position.

In one embodiment, wherein the first coil is energized to release the first plunger such that the first plunger moves from the open position to the closed position.

In one embodiment, wherein the biasing member biases the first plunger in the closed position to seal the outlet aperture.

In one embodiment, wherein the first and the second coils are de-energized after the biasing member biases the first plunger in the closed position to seal the outlet aperture.

In one embodiment, a plurality of sealing rings positioned between any of the valve body, the first sleeve, and/or the second sleeve.

In one embodiment, wherein the second coil is smaller in size than the first coil.

In one embodiment, a first bushing positioned in the first sleeve, the first bushing sized to receive the first plunger therein such that the first plunger slides within the bushing.

In one embodiment, a second bushing positioned in the first sleeve, the second bushing sized to receive the second plunger therein such that the second plunger slides within the second bushing.

In the above description, certain relative terms may be used such as "up," "down," "upper," "lower," "horizontal," "vertical," "left," "right," "proximal," "distal," and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object.

Reference throughout this specification to "one embodiment," "an embodiment," or similar language means that a particular feature, structure, or characteristic described in connection with the embodiment is included in at least one embodiment of the present disclosure. Appearances of the phrases "in one embodiment," "in an embodiment," and similar language throughout this specification may, but do not necessarily, all refer to the same embodiment. Similarly, the use of the term "implementation" means an implementation having a particular feature, structure, or characteristic described in connection with one or more embodiments of the present disclosure, however, absent an express correlation to indicate otherwise, an implementation may be associated with one or more embodiments.

The described features, structures, advantages, and/or characteristics of the subject matter of the present disclosure may be combined in any suitable manner in one or more embodiments and/or implementations. In the following description, numerous specific details are provided to impart a thorough understanding of embodiments of the subject matter of the present disclosure. One skilled in the relevant art will recognize that the subject matter of the present disclosure may be practiced without one or more of the specific features, details, components, materials, and/or methods of a particular embodiment or implementation. In some instances, the benefit of simplicity may provide operational and economic benefits and exclusion of certain elements described herein is contemplated as within the scope of the invention herein by the inventors to achieve such benefits. In other instances, additional features and advantages may be recognized in certain embodiments and/or implementations that may not be present in all embodiments or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

The present subject matter may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

### Clauses that may assist in understanding the invention

1. A shut-off valve assembly to control a flow of fluid, the shut-off valve assembly comprising:
   a valve body extending along an axis between a first end and a second end, the valve body defining an interior cavity, the valve body further defines an inlet aperture fluidically connected to an outlet aperture;
   a first plunger assembled with the interior cavity of the valve body such that the first plunger is disposed along the axis and configured to form a seal with the outlet aperture;
   a first actuator operably assembled with the first plunger, the first actuator is configured to actuate the first plunger to move between a closed position to seal the outlet aperture and an open position to unseal the outlet aperture;
   a second plunger assembled with the interior cavity of the valve body such that the second plunger is disposed relative to the first plunger, the second plunger is configured to engage the first plunger; and
   a second actuator operably assembled with the second plunger, the second actuator configured to actuate the second plunger to move between a first position in which the second plunger does not engage the first plunger when the first plunger is in the closed position and a second position in which the second plunger engages the first plunger when the first plunger is in the open position to hold the first plunger in the open position.
2. The shut-off valve assembly of clause 1, wherein the flow of fluid includes pressurized hydrogen.
3. The shut-off valve assembly of clause 1, wherein the first and the second actuators are each a core solenoid.
4. The shut-off valve assembly of clause 3, wherein the first actuator further comprises:
   a first sleeve configured for assembly with the valve body;
   a first actuator core configured to engage the first plunger; and
   a first coil disposed around the first actuator core, wherein the first coil is energized to move the first plunger to the open position.
5. The shut-off valve assembly of clause 4, wherein the second actuator further comprises:
   a second sleeve configured for assembly with either the first sleeve or the valve body,
      wherein the second plunger is assembled with the second sleeve;
   a second actuator core configured to engage the second plunger; and
   a second coil disposed around the second actuator core, wherein the second coil is energized to move the second plunger to the second position to engage the first plunger while the first plunger is in the open position to hold the first plunger in the open position.
6. The shut-off valve assembly of clause 5, wherein the first coil is de-energized while the first plunger is held in the open position by the second plunger.
7. The shut-off valve assembly of clause 5, further comprising:
   a biasing member disposed between the second plunger and the second coil, wherein the second plunger is biased by the biasing member toward the first plunger to hold the second plunger in the second position.
8. The shut-off valve assembly of clause 7, wherein the second coil is de-energized.
9. The shut-off valve assembly of clause 4, further comprising:
   a biasing member disposed between the first actuator core and the first plunger, wherein the first plunger is biased by the biasing member toward the outlet aperture when the first plunger is in the closed position.
10. The shut-off valve assembly of clause 1, wherein the second plunger is disposed laterally relative to the first plunger.
11. The shut-off valve assembly of clause 1, wherein the second actuator is smaller in size than the first actuator.
12. The shut-off valve assembly of clause 1, further comprising:
   an elastomer seal attached to an end of the first plunger, wherein the elastomer seal forms the seal with the outlet aperture.
13. The shut-off valve assembly of clause 7, wherein the second coil is energized to release the second plunger such that the second plunger moves from the first position to the second position.
14. The shut-off valve assembly of clause 13, wherein the first coil is energized to release the first plunger such that the first plunger moves from the open position to the closed position.
15. The shut-off valve assembly of clause 14, wherein the biasing member biases the first plunger in the closed position to seal the outlet aperture.
16. The shut-off valve assembly of clause 15, wherein the first and the second coils are de-energized after the biasing member biases the first plunger in the closed position to seal the outlet aperture.
17. The shut-off valve assembly of clause 5, further comprising:
   a plurality of sealing rings positioned between any of the valve body, the first sleeve, and/or the second sleeve.
18. The shut-off valve assembly of clause 5, wherein the second coil is smaller in size than the first coil.
19. The shut-off valve assembly of clause 4, further comprising:
   a first bushing positioned in the first sleeve, the first bushing sized to receive the first plunger therein such that the first plunger slides within the bushing.
20. The shut-off valve assembly of clause 19, further comprising:
   a second bushing positioned in the first sleeve, the second bushing sized to receive the second plunger therein such that the second plunger slides within the second bushing.

## Claims

1. A shut-off valve assembly to control a flow of fluid, the shut-off valve assembly comprising:
a valve body extending along an axis between a first end and a second end, the valve body defining an interior cavity, the valve body further defines an inlet aperture fluidically connected to an outlet aperture;
a first plunger assembled with the interior cavity of the valve body such that the first plunger is disposed along the axis and configured to form a seal with the outlet aperture;
a first actuator operably assembled with the first plunger, the first actuator is configured to actuate the first plunger to move between a closed position to seal the outlet aperture and an open position to unseal the outlet aperture;
a second plunger assembled with the interior cavity of the valve body such that the second plunger is disposed relative to the first plunger, the second plunger is configured to engage the first plunger; and
a second actuator operably assembled with the second plunger, the second actuator configured to actuate the second plunger to move between a first position in which the second plunger does not engage the first plunger when the first plunger is in the closed position and a second position in which the second plunger engages the first plunger when the first plunger is in the open position to hold the first plunger in the open position.

2. The shut-off valve assembly of claim 1, wherein
(a) the flow of fluid includes pressurized hydrogen, or
(b) the first and the second actuators are each a core solenoid, or
(c) the second plunger is disposed laterally relative to the first plunger, or
(d) the second actuator is smaller in size than the first actuator, or
(e) further comprising:
an elastomer seal attached to an end of the first plunger, wherein the elastomer seal forms the seal with the outlet aperture.

3. The shut-off valve assembly of claim 2, wherein the first actuator further comprises:
a first sleeve configured for assembly with the valve body;
a first actuator core configured to engage the first plunger; and
a first coil disposed around the first actuator core, wherein the first coil is energized to move the first plunger to the open position.

4. The shut-off valve assembly of claim 3, wherein the second actuator further comprises:
a second sleeve configured for assembly with either the first sleeve or the valve body,
wherein the second plunger is assembled with the second sleeve;
a second actuator core configured to engage the second plunger; and
a second coil disposed around the second actuator core, wherein the second coil is energized to move the second plunger to the second position to engage the first plunger while the first plunger is in the open position to hold the first plunger in the open position.

5. The shut-off valve assembly of claim 4,
(a) wherein the first coil is de-energized while the first plunger is held in the open position by the second plunger, or
(b) further comprising:
a biasing member disposed between the second plunger and the second coil, wherein the second plunger is biased by the biasing member toward the first plunger to hold the second plunger in the second position, or
(c) further comprising:
a plurality of sealing rings positioned between any of the valve body, the first sleeve, and/or the second sleeve, or
(d) wherein the second coil is smaller in size than the first coil.

6. The shut-off valve assembly of claim 5, wherein the second coil is de-energized.

7. The shut-off valve assembly of claim 3, further comprising:
a biasing member disposed between the first actuator core and the first plunger, wherein the first plunger is biased by the biasing member toward the outlet aperture when the first plunger is in the closed position.

8. The shut-off valve assembly of claim 5, wherein the second coil is energized to release the second plunger such that the second plunger moves from the first position to the second position.

9. The shut-off valve assembly of claim 8, wherein the first coil is energized to release the first plunger such that the first plunger moves from the open position to the closed position.

10. The shut-off valve assembly of claim 9, wherein the biasing member biases the first plunger in the closed position to seal the outlet aperture.

11. The shut-off valve assembly of claim 10, wherein the first and the second coils are de-energized after the biasing member biases the first plunger in the closed position to seal the outlet aperture.

12. The shut-off valve assembly of claim 3, further comprising:
a first bushing positioned in the first sleeve, the first bushing sized to receive the first plunger therein such that the first plunger slides within the bushing.

13. The shut-off valve assembly of claim 12, further comprising:
a second bushing positioned in the first sleeve, the second bushing sized to receive the second plunger therein such that the second plunger slides within the second bushing.
